# EUROPEAN PATENT SPECIFICATION

(11) **EP 0 916 478 B1**
(45) Date of publication and mention of the grant of the patent: **11.12.2002**
(21) Application number: 98308821.2
(22) Date of filing: 28.10.1998
(51) Int. Cl.: B29C 70/78, B29C 65/70, B29C 45/16

(54) **Sealing, trimming or finishing strips and methods for making them**
Dicht-, Trimm- oder Profilleisten und Methode zu deren Herstellung
Bandes d'étanchéité, de revetement ou de finition et procédés pour leur fabrication

(30) Priority: 18.11.1997 GB 9724324
(43) Date of publication of application: 19.05.1999
(73) Proprietor: GenCorp Property Inc., Sacramento, CA 95853-7012 (US)
(72) Inventor: Legros, Hervee, 28300 Leves (FR)
(74) Representative: Foster, David Martyn

(56) References cited:
- WO-A-93/16846
- DE-A- 3 812 320
- US-A- 4 183 778
- US-A- 5 256 361

## Description

The invention relates to a sealing, trimming or finishing strip, comprising two channel-shaped base parts joined together by an added part which is over-moulded onto and between the base parts, the added part comprising a soft body portion. The invention also relates to a method of making a sealing, trimming or finishing strip, comprising the steps of forming two channel-shaped base parts and joining them together by means of an added part which is over-moulded onto and between the base parts, the added part comprising a soft body portion.

Such a strip and such a method are shown in US-A-5 505 602. Here, two weather strips are joined together by a moulded-on corner piece. The invention is concerned with the problem of ensuring a good connection between each end of the weather strip and the moulded-on corner piece.

In accordance with the invention, therefore, the strip as first set forth above is characterised in that the added part also comprises respective layers of harder material which mouldedly connect each base part with the body portion. Furthermore, the method as first set forth above is characterised in accordance with the invention in that the steps of forming respective layers of harder material on the body portion which connect each base part with the soft body portion.

Sealing, trimming or finishing strips embodying the invention, and methods according to the invention from making such strips, will now be described, by way of example only, with reference to the accompanying diagrammatic drawing which shows a side view of one of the sealing, trimming or guiding strips such as used in vehicle body construction.

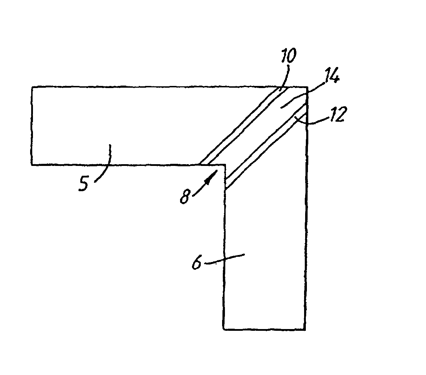

As shown in the Figure, a sealing, trimming or finishing strip comprises two strip members 5,6 which are joined together by an added part in the form of a corner piece 8.

The strip members 5,6 may be lengths of soft material for sealing purposes, for example, of channel-shape (viewed from the side in the Figure) such as for guiding a window glass. Preferably, the strip members 5 and 6 are produced from rubber by an extrusion process, the rubber then being vulcanised in any suitable way.

It is often required to modify extruded strip-like products of the form shown at 5 and 6, after extrusion, by adding other parts. A convenient way of carrying this out is by using an over-moulding process in which the extruded product or products is or are placed in a suitable mould and the added part produced by over-moulding such as by means of injection moulding. As shown in the Figure, an example of the use of such an over-moulding process is to produce the corner piece 8 for joining the two strip members 5,6 together at a right angle.

In accordance with the invention, the over-moulding process used to form the corner piece 8 is a bi-injection process, forming the corner piece 8 from hard and soft thermoplastic elastomer or other suitable materials. As shown more particularly, the corner piece 8 is formed to produce thin layers 10,12 of relatively hard injected material and a wider layer 14 of relatively softer injected material. The injected material is preferably a thermoplastic elastomer.

In this way, the interfaces which exist in the corner piece 8 are only (a) between vulcanised rubber (strip members 5,6) and hard thermoplastic elastomer (layers 10,12), and (b) between hard thermoplastic elastomer (layers 10,12) and soft thermoplastic elastomer (layer 14).

It is found that the use of such a bi-injection process producing relatively hard and relatively soft over-moulded layers of thermoplastic elastomer produces a substantially stronger connection to the vulcanised rubber with significantly reduced risk of rupture during use. In particular, the risk of such rupture is significantly reduced as compared with a corresponding risk which arises if a simple injection process is used to connect the two rubber strip members 5,6 with a single layer of over-moulded soft thermoplastic elastomer.

## Claims

1. A sealing, trimming or finishing strip, comprising two channel-shaped base parts (5,6) joined together by an added part (8) which is over-moulded onto and between the base parts (5,6), the added part (8) comprising a soft body portion (14), **characterised in that** the added part (8) also comprises respective layers of harder material (10,12) which mouldedly connect each base part (5,6) with the body portion (14).

2. A strip according to claim 1, **characterised in that** each base part (5,6) is produced by extrusion.

3. A strip according to claim 2, **characterised in that** each base part (5,6) is made of vulcanised rubber.

4. A strip according to any preceding claim, **characterised in that** the soft body portion (14) and the harder layers (10,12) of the added part (8) are made from thermoplastic elastomer material.

5. A strip according to any preceding claim, **characterised in that** the added part (8) is over-moulded onto the base parts (5,6) by a bi-injection process.

6. A strip according to any preceding claim, **characterised in that** the added part (8) is a corner piece between the two base parts (5,6) which are inclined to each other.

7. A method of making a sealing, trimming or finishing strip, comprising the steps of forming two channel-shaped base parts (5,6) and joining them together by means of an added part (8) which is over-moulded onto and between the base parts (5,6), the added part (8) comprising a soft body portion (14), **characterised by** the steps of forming respective layers (10,12) of harder material on the body portion (14) which connect each base part (5,6) with the soft body portion (14).

8. A method according to claim 7, **characterised by** the step of forming each base part (5,6) by extrusion.

9. A method according to claim 8, **characterised in that** each base part (5,6) is made of vulcanised rubber.

10. A method according to any one of claims 7 to 9, **characterised in that** the soft body portion and the harder layers of the added part (8) are made from thermoplastic elastomer material.

11. A method according to any one of claims 7 to 10, **characterised in that** the added part (8) is over-moulded onto the base parts (5,6) by a bi-injection process.

12. A method according to any one of claims 7 to 11, **characterised in that** the added part (8) is a corner piece between the two base parts (5,6) which are inclined to each other.

13. A method according to any one of claims 7 to 12, **characterised in that** it is for use in vehicle body construction.

## Patentansprüche

1. Dicht-, Trimm- oder Profilleiste mit zwei kanalförmigen Basisteilen (5, 6), die über ein zugefügtes Teil (8), welches durch ein Zweistufen-Spritzgießverfahren auf und zwischen die Basisteile (5, 6) eingefügt ist, miteinander verbundenen sind, wobei das zugefügte Teil (8) einen weichen Grundkörper (14) enthält, **dadurch gekennzeichnet, daß** das zugefügte Teil (8) auch entsprechende Schichten aus härterem Material (10, 12) enthält, welche jedes Basisteil (5, 6) mit dem Grundkörper (14) spritztechnisch verbinden.

2. Leiste nach Anspruch 1, **dadurch gekennzeichnet, daß** jedes Basisteil (5, 6) durch Extrusion hergestellt ist.

3. Leiste nach Anspruch 2, **dadurch gekennzeichnet, daß** jedes Basisteil (5, 6) aus vulkanisiertem Gummi hergestellt ist.

4. Leiste nach einem der voranstehenden Ansprüche, **dadurch gekennzeichnet, daß** der weiche Grundkörper (14) und die härteren Schichten (10, 12) des zugefügten Teils (8) aus einem thermoplastischen Elastomer hergestellt sind.

5. Leiste nach einem der vorangehenden Ansprüche, **dadurch gekennzeichnet, daß** das zugefügte Teil (8) durch ein Bi-Injektionsverfahren auf die Basisteile (5, 6) aufgespritzt ist.

6. Leiste nach einem der vorangehenden Ansprüche, **dadurch gekennzeichnet, daß** das ergänzte Teil (8) ein Eckstück zwischen den beiden Basisteilen (5, 6), welche zueinander angewinkelt sind, ist.

7. Verfahren zur Herstellung einer Dicht-, Trimm- oder Profilleiste, umfassend die Schritte des Bildens von zwei kanalförmigen Basisteilen (5, 6) und des Verbindens dieser miteinander mittels eines zugefügten Teils (8), welches mittels eines Zweistufen-Spritzgießverfahrens auf und zwischen die Basisteile (5, 6) eingefügt ist, wobei das zugefügte Teil (8) einen weichen Grundkörper (14) enthält,
**gekennzeichnet durch** die Schritte
Bilden der entsprechenden Schichten (10, 12) aus härterem Material auf dem Grundkörper (14), welche jedes Basisteil (5, 6) mit dem weichen Grundkörper (14) verbinden.

8. Verfahren nach Anspruch 7, **gekennzeichnet durch** den Verfahrensschritt des Bildens jedes Basisteiles (5, 6) **durch** Extrusion.

9. Verfahren nach Anspruch 8, **dadurch gekennzeichnet, daß** jedes Basisteil (5, 6) aus vulkanisiertem Gummi hergestellt ist.

10. Verfahren nach einem der Ansprüche 7 bis 9, **dadurch gekennzeichnet, daß** der weiche Grundkörper und die härteren Schichten des zugefügten Teiles (8) aus thermoplastischem Elastomer hergestellt sind.

11. Verfahren nach einem der Ansprüche 7 bis 10, **dadurch gekennzeichnet, daß** das ergänzte Teil (8) auf die Basisteile (5, 6) durch ein Bi-Injektionsverfahren aufgespritzt ist.

12. Verfahren nach einem der Ansprüche 7 bis 11, **dadurch gekennzeichnet, daß** das ergänzte Teil (8) ein Eckteil zwischen den beiden Basisteilen (5, 6), welche zueinander angewinkelt sind, ist.

13. Verfahren nach einem der Ansprüche 7 bis 12, **dadurch gekennzeichnet, daß** es dem Gebrauch in einer Fahrzeugkarosserie dient.

## Revendications

1. Bande d'étanchéité, de garniture ou de finition, comportant deux parties de base en forme de canal (5, 6) reliées par une partie ajoutée (8) qui est surmoulée sur et entre les parties de base (5, 6), la partie ajoutée (8) comportant une partie de corps souple (14), **caractérisée en ce que** la partie ajoutée (8) comporte également des couches respectives de matière plus dure (10, 12) qui relient par moulage chaque partie de base (5, 6) à la partie de corps (14).

2. Bande selon la revendication 1, **caractérisée en ce que** chaque partie de base (5, 6) est produite par extrusion.

3. Bande selon la revendication 2, **caractérisée en ce que** chaque partie de base (5, 6) se compose de caoutchouc vulcanisé.

4. Bande selon l'une quelconque des revendications précédentes, **caractérisée en ce que** la partie de corps souple (14) et les couches plus dures (10, 12) de la partie ajoutée (8) sont fabriquées à partir d'une matière élastomère thermoplastique.

5. Bande selon l'une quelconque des revendications précédentes, **caractérisée en ce que** la partie ajoutée (8) est surmoulée sur les parties de base (5, 6) par un processus de bi-injection.

6. Bande selon l'une quelconque des revendications précédentes, **caractérisée en ce que** la partie ajoutée (8) est une pièce de coin entre les deux parties de base (5, 6) qui sont inclinées l'une vers l'autre.

7. Procédé de fabrication d'une bande d'étanchéité, de garniture ou de finition, comportant les étapes consistant à former deux parties de base en forme de canal (5, 6) et à les relier au moyen d'une partie ajoutée (8) qui est surmoulée sur et entre les parties de base (5, 6), la partie ajoutée (8) comportant une-partie de corps souple (14), **caractérisé par** les étapes consistant à former des couches respectives (10, 12) de matière plus dure sur la partie de corps (14) qui relient chaque partie de base (5, 6) à la partie de corps souple (14).

8. Procédé selon la revendication 7, **caractérisé par** l'étape consistant à former chaque partie de base (5, 6) par extrusion.

9. Procédé selon la revendication 8, **caractérisé en ce que** chaque partie de base (5, 6) se compose de caoutchouc vulcanisé.

10. Procédé selon l'une quelconque des revendications 7 à 9, **caractérisé en ce que** la partie de corps souple (14) et les couches plus dures de la partie ajoutée (8) sont fabriquées à partir d'une matière élastomère thermoplastique.

11. Procédé selon l'une quelconque des revendications 7 à 10, **caractérisé en ce que** la partie ajoutée (8) est surmoulée sur les parties de base (5, 6) par un processus de bi-injection.

12. Procédé selon l'une quelconque des revendications 7 à 11, **caractérisé en ce que** la partie ajoutée (8) est une pièce de coin entre les deux parties de base (5, 6) qui sont inclinées l'une vers l'autre.

13. Procédé selon l'une quelconque des revendications 7 à 12, **caractérisé en ce qu'**il est destiné à une utilisation dans la construction de carrosserie automobile.
